# EUROPÄISCHE PATENTSCHRIFT

(11) **EP 1 838 989 B1**
(45) Veröffentlichungstag und Bekanntmachung des Hinweises auf die Patenterteilung: **05.01.2011**
(21) Anmeldenummer: 06704302.6
(22) Anmeldetag: 18.01.2006
(51) Int. Cl.: F16L 41/08, F16L 37/098

(54) **ANSCHLUSSVORRICHTUNG F]R MEDIENLEITUNGEN**
CONNECTING DEVICE FOR MEDIA PIPES
DISPOSITIF DE RACCORDEMENT POUR CONDUITES DE FLUIDE

(30) Priorität: 18.01.2005 DE 202005000750 U
(43) Veröffentlichungstag der Anmeldung: 03.10.2007
(73) Patentinhaber: Voss Automotive GmbH, 51688 Wipperfürth (DE)
(72) Erfinder: HAGEN, Harald, 51688 Wipperfürth (DE); SALOMON-BAHLS, Bernd, 58553 Halver (DE); SUHR, Andreas, 50823 Köln (DE); TERLAU, Norbert, 51515 Kürten (DE); LECHNER, Martin, 51789 Lindlar (DE)
(74) Vertreter: Patentanwälte Dr. Solf & Zapf
(86) Internationale Anmeldenummer: PCT/EP2006/050294
(87) Internationale Veröffentlichungsnummer: WO 2006/077231

(56) Entgegenhaltungen:
- EP-A- 0 551 755
- EP-A- 0 795 712
- EP-A- 1 207 332

## Beschreibung

Die vorliegende Erfindung betrifft eine Anschlußvorrichtung für Medienleitungen (Rohr- oder Schlauchleitungen für pneumatische oder hydraulische Druck-und Strömungmedien) gemäß dem Oberbegriff des Anspruchs 1.

Die WO 2004/029497 A1 offenbart einige Ausführungen einer Einpresspatrone (Figuren 11 bis 18 und Ansprüche 11 bis 15), die in eine Anschlußöffnung eines Aggregateteils einsetzbar bzw. einpressbar ist. Zur Halterung innerhalb der Anschlußöffnung ist auf dem Außenumfang des Einpressabschnittes mindestens ein radial vorstehendes Halte- bzw. Zahnelement zum form- oder kraftformschlüssigen Eingriff in die Innenfläche der Anschlußöffnung vorgesehen. Hierbei ist eine Ausführung der Halteelemente beschrieben, die nach dem Einsetzen bzw. Einpressen ein Lösen durch eine Herausschraubbewegung ermöglicht. Die Anschlussöffnung der Einpresspatrone und die Halteeinrichtung sind derart ausgebildet, dass eine Medienleitung selbst mit einem Leitungsende unmittelbar einsteckbar und arretierbar ist (sogenannte "dornlose Steckverbindung"). Dazu ist in der Anschlussöffnung ein radial verformbarer Klemmring gelagert, der zum Arretieren des von dem Leitungsende gebildeten Steckabschnittes mit einem Innenkonus innerhalb der Anschlussöffnung so zusammenwirkt, dass durch eine Zugbewegung der Leitung der diese umschließende Klemmring kraftschlüssig mitgenommen und in den Innenkonus hineingezogen und dadurch radial verengt wird, so dass er form- oder kraftformschlüssig gegen den Leitungsumfang wirkt. Um nachfolgend ein Lösen der Leitung zu ermöglichen, ist der Innenkonus an einem lösbaren Einsatzteil gebildet, so dass nach Lösen dieses Einsatzteils die Leitung zusammen mit dem Klemmring entnehmbar ist. In manchen Anwendungsfällen wird allerdings eine rastende, rein formschlüssige Arretierung des Steckerteils gefordert. Zudem hat sich bei der bekannten Ausführung in der Praxis gezeigt, dass das Einpressen eine hohe Kraft erfordert und daher nicht manuell, sondern nur mit einer geeigneten Pressvorrichtung möglich ist. Ferner ist die Herstellung der Komponenten mit einem hohen Aufwand verbunden. Beispielsweise muß die Anschlußöffnung des Aggregateteils durch spanende Bearbeitung als zylindrische Bohrung hergestellt werden. Die bekannten äußeren Halteelemente sind entweder als Metallteile bereichsweise in das Material der aus Kunststoff bestehenden Einpresspatrone eingebettet oder als Ansätze der aus Metall bestehenden Einpresspatrone gebildet.

Das Dokument EP 0 795 712 A1 beschreibt keine als "Einpresspatrone" ausgebildete Anschlussvorrichtung. Vielmehr sind Maßnahmen zum Abdichten von Rohranschlüssen beschrieben. Im Einzelnen beschreibt dieses Dokument eine Anschlussvorrichtung für eine so genannte Nebenrohrleitung, die abgedichtet an einer Öffnung (Querbohrung) einer so genannten Hauptrohrleitung oder eines Schachtes anzuschließen ist. Offensichtlich handelt es sich um eine Verbindung im Bereich der Abwasserkanaltechnik, weil die Hauptrohrleitung aus Betonrohren besteht, die mit Längs- und Querbewehrungen sowie mit nachträglichen Querbohrungen versehen sind. Zum Anschluss der Nebenrohrleitung (Anschlussrohr) wird in die jeweilige Querbohrung zunächst ein Hohlstopfen in Form eines Elastomereinsatzes eingesetzt, bei dem es sich aber lediglich um eine Dichtung handelt, also nicht um eine Einpresspatrone im Sinne der vorliegenden Erfindung. In den Dichtungseinsatz wird anschließend ein relativ härterer Anschlussstutzen mit einem Eingriffsende eingesetzt (eingesteckt oder eingeschraubt), um den Einsatz durch Dehnung in der Hauptrohröffnung dicht zu verkeilen. Der Anschlussstutzen weist auf seiner dem Eingriffsende gegenüberliegenden, außerhalb des Einsatzes vorstehenden Seite ein Muffenende auf, um ein Anschlussrohr mittels eines Dichtrings anzuschließen.

Der vorliegenden Erfindung liegt die Aufgabe zugrunde, eine Anschlußvorrichtung der genannten Art zu schaffen, die insbesondere für Stecksysteme mit formschlüssig rastender oder form- oder kraftformschlüssig eingreifender Arretierung konzipiert ist und sich durch verbesserte Herstellungs- und Gebrauchseigenschaften auszeichnet.

Erfindungsgemäß wird dies durch die Merkmale des Anspruchs 1 erreicht. Vorteilhafte Ausgestaltungen der Erfindung sind in den abhängigen Ansprüchen enthalten.

In einer ersten Ausführungsform der Erfindung weist die Halteeinrichtung ein innerhalb des als Einpresspatrone ausgebildeten Einsatzteils im Bereich der Anschlussöffnung gelagertes, radial elastisches Rastelement zum formschlüssig rastenden Hintergreifen einer radialen Raststufe des Steckabschnittes auf. Dabei besteht die Einpresspatrone aus einem zweiteiligen Patronengehäuse, das aus zwei lösbar bzw. voneinander trennbar verbundenen Teilen besteht. Das Rastelement ist derart gehalten, dass es durch Lösen des einen Teils des Patronengehäuses zusammen mit dem Steckerteil und dem Rastelement entnehmbar ist. In bevorzugter Ausgestaltung ist dabei vorgesehen, dass die Einpresspatrone aus einem hülsenförmigen Außenteil und einem koaxial in diesem sitzenden, hülsenförmigen Innenteil besteht, wobei die Einpresspatrone über das Außenteil unlösbar in die Anschlussöffnung des Aufnahmeteils einsetzbar ist, wobei das Innenteil lösbar mit dem Außenteil verbunden ist, und wobei das Rastelement derart gelagert ist, dass es durch Lösen des Innenteils aus dem Außenteil entnehmbar ist. Das Außenteil verbleibt somit stets unlösbar in der Anschlussöffnung des jeweiligen Aufnahmeteils und bildet somit einen Adapter, um einen Steckverbindungsanschluß an einem beliebigen Aufnahmeteil (beliebiges Verbindungsteil, z. B. auch Aggregat, wie beispielsweise Ventilgehäuse, Druckspeicher/-Erzeuger oder dergleichen) zu ermöglichen, welches lediglich die Anschlußöffnung für die Einpresspatrone aufzuweisen braucht.

Alternativ ist auch eine Ausführung möglich, bei der das Rastelement an dem leitungsseitigen Steckabschnitt gelagert und somit zusammen mit diesem in die Anschlussöffnung einzuführen ist, bis es eine innerhalb der Anschlussöffnung gebildete Raststufe rastend formschlüssig hintergreift. Indem die Raststufe an dem einen, lösbaren Teil des Einsatzteils gebildet ist, ist ebenfalls ein Lösen in der schon beschriebenen Weise möglich.

Durch eine vorteilhafte Ausgestaltung, wonach die Anschlußöffnung des Aufnahmeteils zu ihrer äußeren Mündungsseite hin leicht konisch erweitert ausgebildet ist, wird eine vereinfachte Herstellung des Aufnahmeteils ermöglicht, indem dieses als Druckgußteil z. B. aus Kunststoff, Aluminium oder dergleichen geformt werden kann. Dabei wirkt die leichte Konizität der Anschlußöffnung als Entformschräge und macht dadurch ein einfaches Entformen mit Kernzug möglich. Zudem erübrigt sich jegliche spanende Nachbearbeitung der Anschlußöffnung. Dies ist mit dem zusätzlichen Vorteil verbunden, dass die durchgehend sehr glatte Guß-Oberfläche erhalten bleibt, wohingegen durch eine spanende Bearbeitung bei manchen Werkstoffen das darunterliegende, poröse Gußmaterial freigelegt werden würde. Die glatte Oberfläche ist für das Einpressen und für die Abdichtung der Einpresspatrone vorteilhaft. Durch die Erfindung wird auch eine Reduzierung der zum Einpressen aufzubringenden Kraft erreicht, so dass auch eine manuelle Montage möglich ist. Die durch die erfindungsgemäße Ausgestaltung erreichte Einpresskraft liegt jedenfalls unter 500 N, vorzugsweise sogar im Bereich um 150 N oder weniger.

In weiterer vorteilhafter Ausgestaltung ist vorgesehen, dass der Einpressabschnitt der Einpresspatrone auf seinem Außenumfang über den Umfang verteilt angeordnete Halteelemente aufweist, die Bestandteile eines metallischen, ringförmigen sowie vorzugsweise an einer Umfangsstelle eine axial und radial durchgehende Unterbrechung aufweisenden Halteteils sind. Dieses in einer Ringnut des Einpressabschnittes sitzende Halteteil wird somit als separates Einzelteil vorgefertigt und durch einfaches Aufsetzen auf den Einpressabschnitt der Einpresspatrone montiert. Dazu ist das Halteteil als im Wesentlichen zylindrisches (bzw. wegen der Umfangsunterbrechung "teilzylindrisches") Blechformteil ausgebildet, wobei die Halteelemente als freigeschnittene und schräg nach außen gebogene Haltezungen ausgebildet sind. Dabei kann das Halteteil mit Vorteil derart aus einem Drahtmaterial gewalzt sein, dass seine Randkanten natürliche Rundungsradien aufweisen. Auch diese Maßnahme trägt zu einer wirtschaftlichen Herstellung bei, und zwar durch Einsparung eines zusätzlich Entgrat-Vorganges (z. B. sog. Trovalisieren).

In weiteren Ausführungsformen der Erfindung kann das Einsatzteil aus einem Außenteil und einem Innenteil bestehen, die in radialer Richtung über keilartige Schrägflächen derart zusammenwirken, dass das Außenteil in einer Ausgangsstellung mit seinem Einsetzabschnitt mit vorteilhaft geringer Einsetzkraft in die Anschlussöffnung einführbar und anschließend durch eine relative axiale Einführbewegung des Innenteils zur Halterung in der Anschlussöffnung dübelartig radial spreizbar ist. Das Einsatzteil bildet somit eigentlich keine Einpresspatrone, weil es nahezu ohne Presskraft eingesetzt werden kann. Erst durch das radiale Spreizen mittels des Innenteils greift das Außenteil mit Halteelementen vorzugsweise form- oder kraftformschlüssig in die Umfangswandung der Anschlussöffnung ein. Besondere Ausführungsformen hierzu werden nachfolgend in der Beschreibung bevorzugter Ausführungsbeispiele noch genauer erläutert werden.

Die Erfindung wird im Folgenden anhand der Zeichnungen und darin veranschaulichter, bevorzugter Ausführungsbeispiele genauer erläutert. Dabei zeigen:
- Fig. 1: eine erfindungsgemäße Anschlußvorrichtung im Axialschnitt mit einem zusätzlichen Steckerteil in einer ersten Steckposition (sog. Vorraststellung),
- Fig. 2: die Ausführungsform gemäß Fig. 1 in einer winkelversetzten Axialschnitt-Ebene und in einer zweiten Steckposition des Steckerteils (sog. Vollraststellung),
- Fig. 3: einen weiteren, nochmals winkelversetzten Axialschnitt der Anschlußvorrichtung gemäß Fig. 1 und 2, jedoch ohne Steckerteil,
- Fig. 4: einen Axialschnitt nur der Einpresspatrone der Ausführung gemäß Fig. 1 bis 3 mit geschlossener Dreharretierung,
- Fig. 5: einen weiteren, winkelversetzten Axialschnitt der Einpresspatrone gemäß Fig. 4 mit offener Dreharretierung,
- Fig. 6 und 7: Perspektivansichten von Einzelteile eines zweiteilig ausgebildeten Einpresspatronen-Gehäuses der Ausführung nach Fig. 1 bis 5,
- Fig. 8 und 9: zugehörige Schnittansichten zu Fig. 6 bzw. 7,
- Fig. 10: einen Axialschnitt des Aufnahmeteils mit der Anschlußöffnung in einer ersten Ausführung,
- Fig. 11: einen Axialschnitt analog zu Fig. 10 in einer zweiten Ausführung,
- Fig. 12: eine Ausschnittvergrößerung des Bereichs XII in Fig. 11,
- Fig. 13: eine Ausschnittvergrößerung des Bereichs XIII in Fig. 11 in einer gegenüber Fig. 12 alternativen Ausgestaltung,
- Fig. 14: eine Perspektivansicht eines Halteteils der Einpresspatrone,
- Fig. 15: eine vergrößert Seitenansicht des Halteteils gemäß Fig. 14,
- Fig. 16: einen Schnitt des Halteteils in der Ebene A-A gemäß Fig. 15,
- Fig. 17: einen Schnitt in der Ebene B-B gemäß Fig. 15,
- Fig. 18: einen Schnitt in der Ebene C-C gemäß Fig. 15,
- Fig. 19: eine Vergrößerung des Details E in Fig. 17,
- Fig. 20: eine Vergrößerung des Details F in Fig. 15,
- Fig. 21: eine Vergrößerung des Details G in Fig. 18,
- Fig. 22: einen vergrößerten Schritt in der Ebene H-H gemäß Fig. 16,
- Fig. 23: einen stark vergrößerten Ausschnitt eines Schnittes in der Ebene A-A gemäß Fig. 15 (allerdings mit entgegengesetzter Blickrichtung) im Bereich eines Hafteelementes des Halteteils,
- Fig. 24 bis 28: weitere Ausführungsformen der Anschlussvorrichtung mit dübelartig spreizbarem Einsatzteil jeweils in Halb-Axialschnitt- Darstellungen.

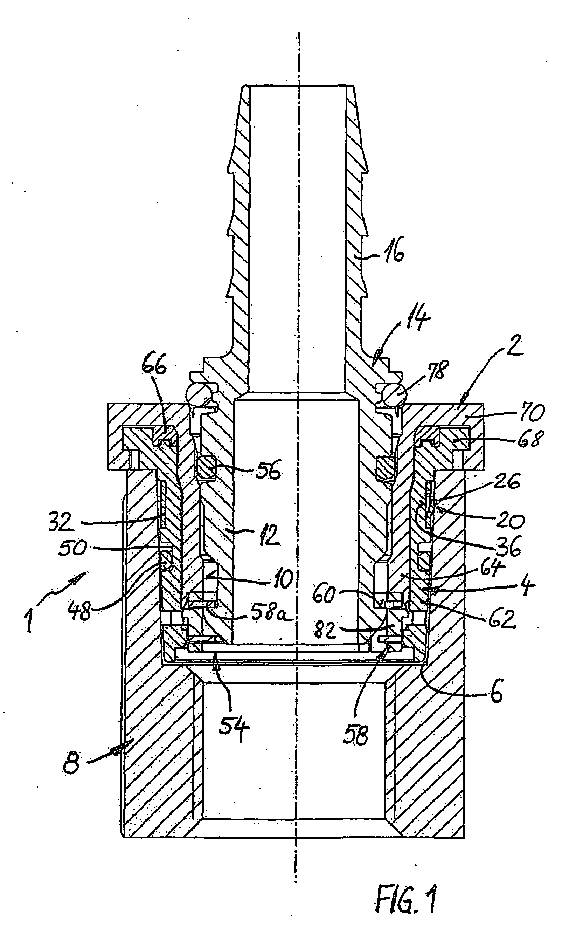

Eine erfindungsgemäße Anschfußvonichtung 1 besteht in den ersten Ausführungen gemäß Fig. 1 bis 23 aus einer Einpresspatrone 2, die mit einem Einpressabschnitt 4 in eine Anschlussöffnung 6 eines Aufnahmeteils 8 einsetzbar (einpressbar) ist. Das Aufnahmeteil 8 kann ein beliebiges Verbindungs- oder Anschlussteil sein, beispielsweise auch ein Gerät bzw. Aggregat, wie ein Ventilgehäuse, ein Druckerzeuger oder Druckspeicher oder dergleichen.

Die Einpresspatrone 2 ist als Kupplungsteil einer Steckkupplung zum lösbaren Anschluß einer Medienleitung ausgebildet, und zwar als Muffenteil mit einer Stecköffnung 10 zur Aufnahme eines Einsteckabschnittes 12 eines Steckerteils 14, wobei das Steckerteil 14 seinerseits mit einer Medienleitung verbindbar oder verbunden ist. Somit bildet die Einpresspatrone 2 einen Adapter, über den eine Medienleitung an dem jeweiligen, lediglich die Anschlußöffnung 6 aufweisenden Aufnahmeteil 8 über ein Stecksystem lösbar anschließbar ist.

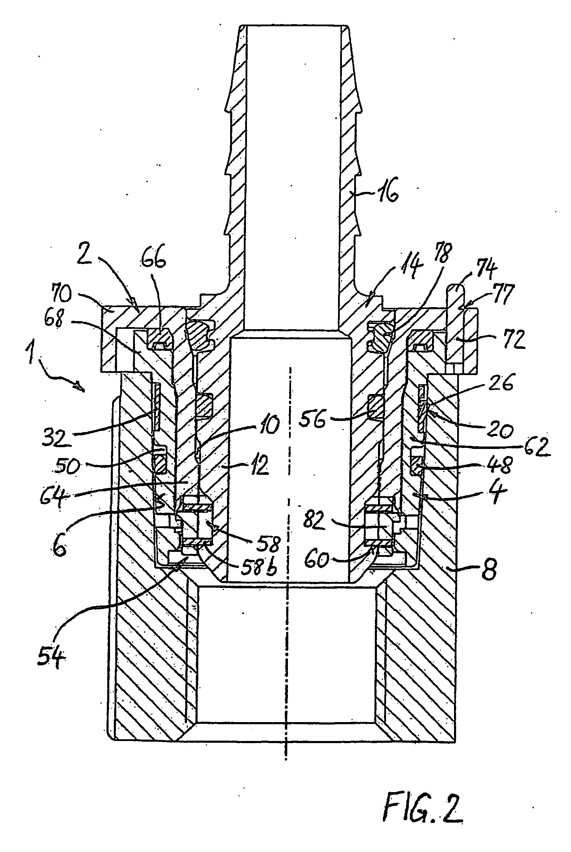

Die in den Figuren 1 und 2 nicht dargestellte Medienleitung ist beispielsweise auf einen Anschlußdorn 16 des Steckerteils 14 aufsteckbar.

Die Einpresspatrone 2 weist auf dem Außenumfang ihres Einpressabschnittes 4 widerhakenartige Halteelemente 20 zum form- oder kraftformschlüssigen - und dadurch unter normalen Betriebsbedingungen unlösbaren - Verkrallen in der Anschlussöffnung 6 des Aufnahmeteils 8 auf.

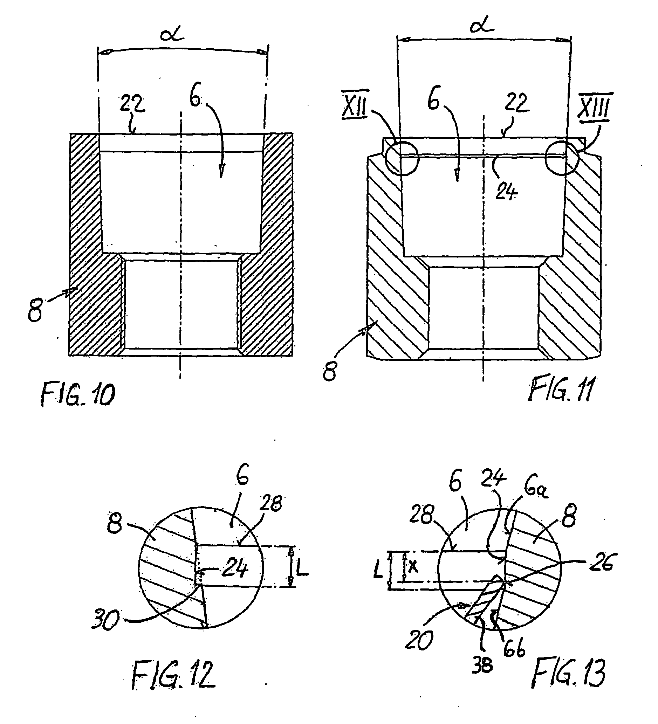

Wie sich insbesondere aus Fig. 10 und 11 ergibt, ist bevorzugt die Anschlußöffnung 6 des Aufnahmeteils 8 zu ihrer äußeren Mündungsseite 22 hin leicht konisch erweitert ausgebildet. Hierbei bedeutet die Angabe "leicht konisch", dass sich die Anschlußöffnung 6 mit einem Konuswinkel a etwa im Bereich von 1° bis 6° erweitert. Vorzugsweise beträgt der Konuswinkel α etwa 4,5°.

In der Ausführung gemäß Fig. 10 ist die Anschtussöffnung 6 über ihre axiale Länge hinweg durchgehend leicht konisch erweitert ausgebildet. An die konische Anschlussöffnung 6 schließt sich über eine radial nach innen vorspringende Stufe ein Innengewindeabschnitt an. Diese Ausführung des Aufnahmeteils bildet somit einen Anschlussadapter mit Anschlussgewinde.

In der in Fig. 11 veranschaulichten, vorteilhaften Ausgestaltung weist dem gegenüber die leicht konische Anschlußöffnung 6 im Wirkbereich der Halteelemente 20 des eingesetzten Einpressabschnittes 4 der Einpresspatrone 2 einen axial sehr kurz bemessenen, zylindrisch ausgebildeten Halteflächenabschnitt 24 auf. Wie sich aus den vergrößerten Ausschnitten in Fig. 12 und 13 ergibt, weist der zylindrische Halteflächenabschnitt 24 eine kurze axiale Länge L auf, die etwa im Bereich von 0,5mm bis 4mm, insbesondere 1,5mm bis 2,5mm liegt. Der zylindrische Halteflächenabschnitt 24 trägt zu einem effektiven Verkrallen der Halteelemente 20 bei. Wie sich hierzu aus Fig. 13 ergibt, gelangen die Halteelemente 20 im korrekt eingesetzten Zustand des Einpressabschnittes 4 derart mit äußeren Haltekanten 26 im Bereich des zylindrischen Halteflächenabschnittes 24 zum verkrallenden Einriff, dass zwischen den Haltekanten 26 und dem der Mündungsseite 22 zugekehrten Ende 28 des zylindrischen Halteflächenabschnittes 24 ein axialer Abstand x vorhanden ist, der mindestens 0,5 mm beträgt.

Gemäß Fig. 12 kann der zylindrische Halteflächenabschnitt 24 durch eine radiale Vertiefung bzw. Ausnehmung in der konischen Innenfläche der Anschlussöffnung 6 gebildet sein. Vorzugsweise geht hierbei der Halteflächenabschnitt 24 einerseits zur Mündungsseite 22 hin mit gleichem Innendurchmesser, also ohne radiale Stufe, und andererseits gegenüberliegend über eine radiale, den Innendurchmesser sprunghaft reduzierende Stufenfläche 30 in die konische Innenfläche der Anschlussöffnung 6 über.

In der in Fig. 13 dargestellten Alternative geht der zylindrische Halteflächenabschnitt 24 in beiden axialen Richtungen in mit jeweils gleichem Innendurchmesser, also ohne radiale, den Durchmesser sprunghaft ändernde Stufen, angrenzende konische Innenflächenabschnitte 6a bzw. 6b der Anschlussöffnung 6 über.

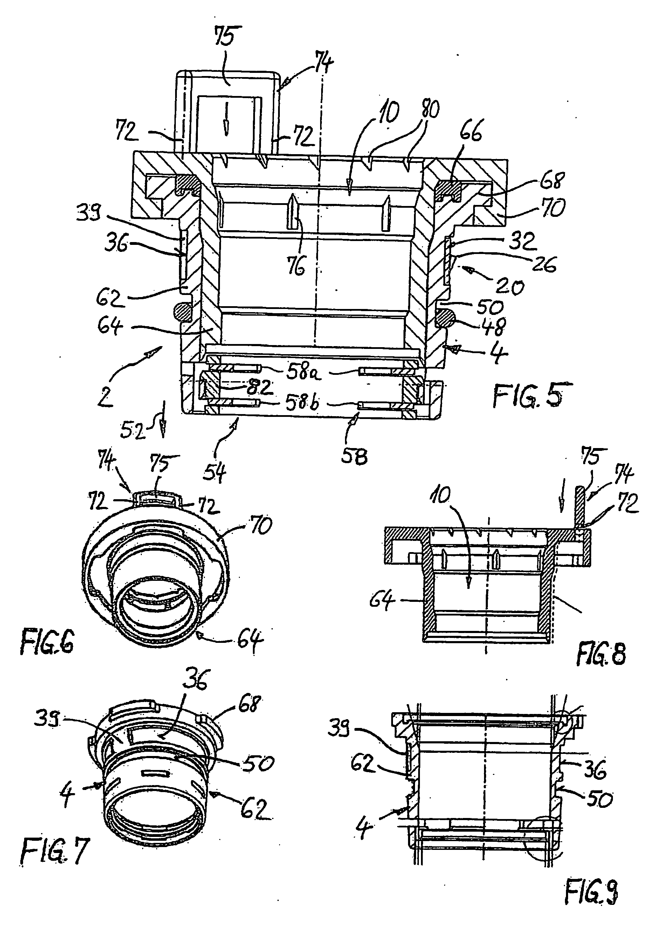

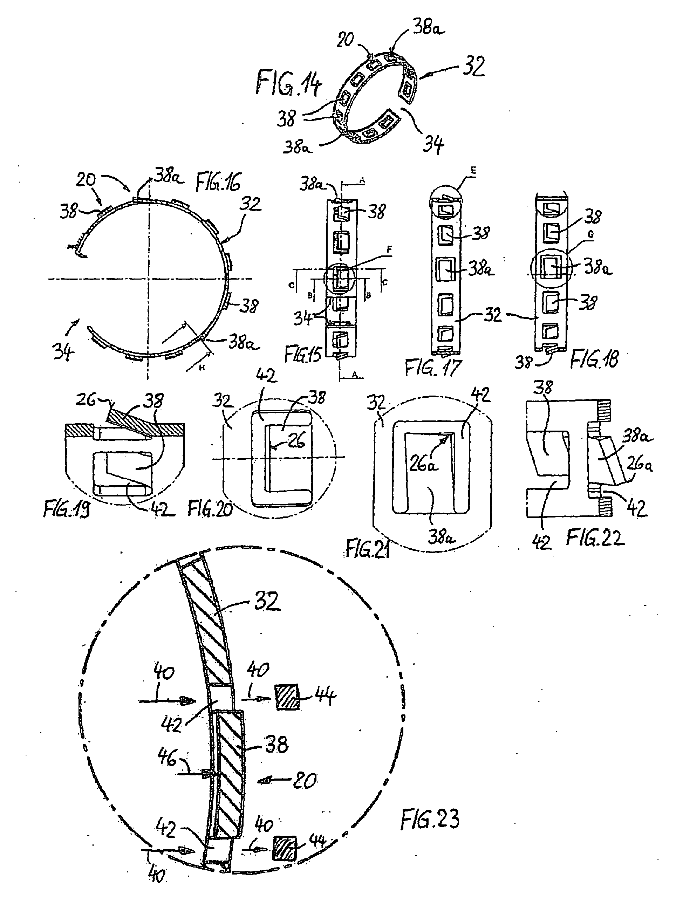

In weiterer vorteilhafter Ausgestaltung sind die Halteelemente 20 als Bestandteile eines metallischen, ringförmigen Halteteils 32 ausgebildet. Dieses ringförmige Halteteil 32 weist vorzugsweise an einer Umfangsstelle eine axial und radial durchgehende Unterbrechung 34 auf, um das ringförmige Halteteil 32 in eine auf dem Außenumfang des Einpressabschnittes 4 der Einpresspatrone 2 vorgesehene Ringnut 36 einsetzen zu können. Das Halteteil 32 mit der Unterbrechung 34 ist am besten in den gesonderten Darstellungen in Fig. 14 bis 23 zu erkennen. Zu der Ringnut 36 des Einpressabschnittes 40 wird insbesondere auf Fig. 5, 7 und 9 verwiesen.

Gemäß Fig. 14 bis 23 ist das Halteteil 32 als im Wesentlichen zylindrisches bzw. wegen der Umfangsunterbrechung 34 teilzylindrisches Blechformteil ausgebildet. Dabei sind die Halteelemente 20 als freigeschnittene und schräg nach außen gebogene Haltezungen 38, 38a ausgebildet, die an ihren freien Enden die oben bereits erwähnten Haltekanten 26 aufweisen. Hierbei ist eine erste Art von Haltezungen 38 vorgesehen, die sich in axialer, der Einsetzrichtung entgegengesetzter Richtung und schräg radial nach außen erstrecken. Bevorzugt ist als Sicherungsmittel gegen Verdrehen der Einpresspatrone 2 innerhalb der Anschlussöffnung 6 des Aufnahmeteils 8 mindestens eine andersartige Haltezunge 38a vorgesehen, die sich in Umfangsrichtung und schräg radial nach außen erstreckt. Bevorzugt sind zwei solche Haltezungen 38a einander etwa diametral gegenüberliegend angeordnet, wobei sich diese zwei Haltezungen 38a in entgegengesetzte Umfangsrichtungen erstrecken (vgl. Fig. 16), um eine gute Verdrehsicherung in beiden Drehrichtungen zu gewährleisten. Wie sich aus Fig. 22 ergibt, können diese Haltezungen 38a zusätzlich derart um ihre Längsachse tordiert sein, dass sie mit einem Haltekanten-Eckbereich 26a gleichzeitig zur umfangsgemäßen und auch zur axialen Befestigung der Einpresspatrone 2 in der Anschlussöffnung 6 beitragen. Die Haltezungen 38a sichern als radial nach außen wirkende Sicherungsmittel das Halteteil 32 effektiv gegen Verdrehen in der Anschlussöffnung 6. Um auch ein Verdrehen der Einpresspatrone 2 innerhalb des ringförmigen Halteteils 32 auszuschließen, ist als radial nach innen wirkendes Sicherungsmittel bevorzugt innerhalb der Ringnut 36 des Einpressabschnittes 4 ein Ansatz 39 vorgesehen (siehe insbesondere Fig. 5, 7 und 9), wobei das Halteteil 32 mit seiner Umfangsunterbrechung 34 diesen Ansatz 39 so aufnimmt, dass in Umfangsrichtung praktisch eine spielfreie Verbindung gegeben ist. Somit wirkt das Halteteil 32 insgesamt vorteilhafterweise als Verdrehsicherung für die Einpresspatrone 2.

Alternativ zu der beschriebenen, bevorzugten Ausführung kann das Halteteil 32 zur Verdrehsicherung auch Haltezungen nach Art der Haltezungen 38a aufweisen, die aber derart tordiert bzw. gebogen sind, dass sie bereichsweise sowohl radial nach außen als auch radial nach innen wirken. Dabei kann sich dann eventuell der Ansatz 39 des Einpressabschnittes 4 erübrigen. Zudem kann das Halteteil 32 auch umfangsgemäß geschlossen, d. h. ohne die Unterbrechung 34 ausgebildet sein. Zur Halterung auf dem Einpressabschnitt 4 kann dabei das Halteteil 32 nach innen weisende Haltezungen aufweisen, die in eine Nut und/oder in die Außenumfangsfläche des Einpressabschnittes 4 eingreifen. Ferner kann das Halteteil 32 auch mehrteilig, z. B. aus zwei Halbschalen ausgebildet sein, die mit geeigneten Mitteln an der Einpresspatrone 2 und/oder gegeneinander fixiert, z. B. verrastet sind.

Im Interesse einer wirtschaftlichen Herstellung ist es vorteilhaft, wenn das Halteteil 32 derart aus einem ursprünglich beispielsweise im Querschnitt kreisförmigen Drahtmaterial zu einem flachen Querschnitt bzw. teil-hohlzylindrisch gewalzt ist, dass seine Randkanten natürliche Rundungsradien erhalten. Dadurch erübrigt sich ein separater Entgrat-Vorgang, der sinnvoll wäre, wenn das Halteteil aus einem flachen Blechmaterial ausgestanzt und dann gebogen werden würde. Die Haltezungen 38, 38a allerdings sind aus dem Halteteil 32 derart freigestanzt, dass im Bereich der Haltekanten 26 etwa radial nach außen gerichtete, scharfkantige Stanzgrate gebildet sind. Dies trägt zu einem sehr festen, formschlüssigen Verkrallen in der Anschlussöffnung 6 bei. Wie sich aus Fig. 23 ergibt, werden zunächst durch einen Stanzvorgang von innen nach außen in Richtung der eingezeichneten Pfeile 40 U-förmige, die Kontur der Haltezungen 38, 38a umgebende Taschen 42 ausgestanzt, wodurch ein entsprechend U-förmiger Stanzrest 44 anfällt, der in Fig. 23 geschnitten dargestellt ist. Durch diesen Stanzvorgang erhält somit jede Haltezunge 38, 38a nach außen gerichtete Stanzgrate. Erst an den Stanzvorgang anschließend werden die so frei gestanzten Haltezungen 38, 38a radial schräg nach außen gebogen (Pfeil 46 in Fig. 23).

Das Halteteil 32 kann grundsätzlich aber auch als Stanzbiegeteil aus Blech hergestellt werden. Dabei ist ein Entgraten optional, zumal eventuelle Grate durch die bevorzugte Verdrehsicherung unschädlich sind, weil durch Vermeidung von oszillierenden Bewegungen auch Beschädigungen der Einpresspatrone 2 durch Stanzgrate des Halteteils 32 vermieden werden. Es ist auch möglich, das Stanzbiegeteil vor dem radialen Ausbiegen der Haltezungen 38, 38a so zu entgraten, dass nur Grate an äußeren Randkanten entfernt werden, nicht aber im Bereich der Kanten der Haltezungen. Bei einem Trovalisier-Vorgang kann dies durch Verwendung von entsprechend großen Steinen (Schleifkörpern) erreicht werden, die durch ihre Größe nicht in die Bereiche der gestanzten Taschen 42 eingreifen können.

Bevorzugt weist das Halteteil 32 eine Anzahl von sechs bis fünfzehn, wie dargestellt insbesondere zwölf, Halteelementen 20 bzw. Haltezungen 38, 38a in gleichmäßiger, radialsymmetrischer Umfangsverteilung auf. Ferner weist das Halteteil 32 eine radiale Material-Dicke im Bereich von 0,2mm bis 0,6mm, insbesondere 0,4mm, auf. Die Unterbrechung 34 des im Übrigen ringförmigen Halteteils 32 - und somit entsprechend auch der korrespondierende Ansatz 39 in der Ringnut 36 der Einpresspatrone 2 - erstreckt sich über einen Winkel von maximal 30°, so dass das Halteteil 32 einen Umgreifungswinkel ≥330° aufweist. Dabei besteht das Halteteil 32 aus Federstahl, vorzugsweise rostfreiem Edelstahl, oder aus einer Beryllium-Verbindung, insbesondere Beryllium-Bronze.

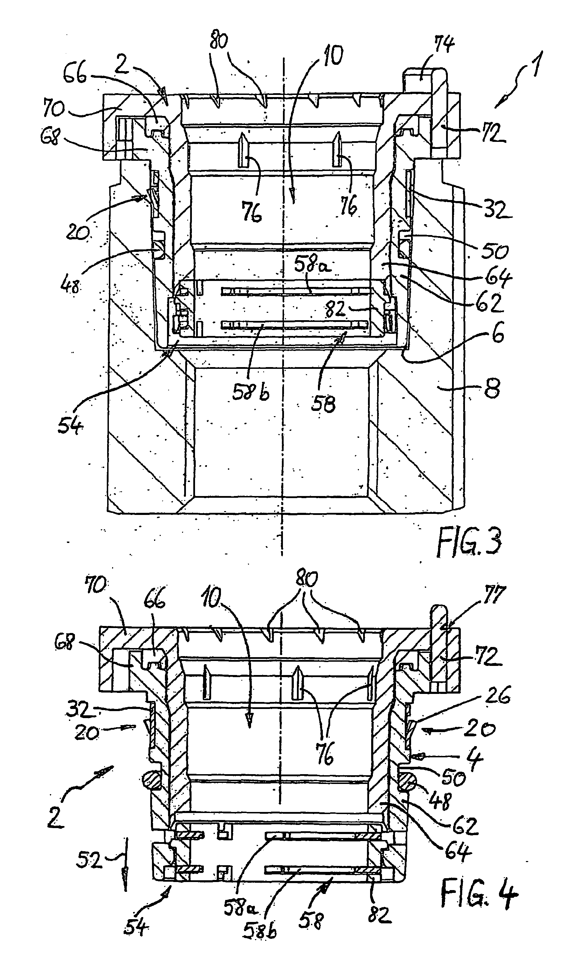

Zur Abdichtung der Einpresspatrone 2 innerhalb der Anschlussöffnung 6 trägt der Einpressabschnitt 4 auf seinem Außenumfang mindestens einen Dichtring 48 in einer äußeren Ringnut 50. Es ist vorteilhaft, wenn der Dichtring 48 - wie dargestellt - in einem den Halteelementen 20 bzw. dem Halteteil 32 mit den Haltezungen 38, 38a in Einsetzrichtung (siehe hierzu den Pfeil 52 z. B. in Fig. 4) vorgeordneten Bereich des Einpressabschnittes 4 angeordnet ist. Dadurch wird der mit dem Dichtring 48 zusammenwirkende Dichtbereich der Anschlussöffnung 6 beim Einsetzen der Einpresspatrone nicht von den Halteelementen 20 erreicht und bleibt daher vorteilhafterweise riefenfrei. Dadurch bleibt stets eine optimale Dichtwirkung gewährleistet. Zusätzlich zu der in Fig. 11 dargestellten Ausführung kann die Anschlussöffnung 6 einen kurzen zylindrischen Dichtflächenabschnitt (nicht dargestellt) im Anlagebereich des Dichtrings 48 aufweisen (insbesondere zum Toleranzausgleich).

Im folgenden werden das Steckprinzip zum lösbaren Anschluss der Medienleitung bzw. des mit dieser verbundenen Steckerteils 14 sowie eine Halteeinrichtung 54 erläutert, die zum lösbaren Arretieren des Einsteckabschnittes 12 in seinem in die Stecköffnung 10 der Einpresspatrone 2 eingesteckten und umfangsgemäß über mindestens eine Dichtung 56 abgedichteten Zustand vorgesehen ist.

Bei der in den Fig. 1 bis 9 veranschaulichten, erfindungsgemäßen Ausführungsform ist innerhalb der Einpresspatrone 2 ein radial elastisches Rastelement 58 zum formschlüssig rastenden Hintergreifen einer radialen Raststufe 60 des Einsteckabschittes 12 gelagert. Um ein Lösen des Steckerteils 14 aus seinem formschlüssig verrasteten Einsteckzustand zu ermöglichen, weist die Einpresspatrone 2 ein zweiteiliges Patronengehäuse aus einem hülsenförmigen Außenteil 62 und einem koaxial in diesem sitzenden, hülsenförmigen Innenteil 64 auf. Die Einpresspätrone 2 ist über das den Einpressabschnitt 4 mit den Halteelementen 20 aufweisende Außenteil 62 unlösbar in die Anschlussöffnung 6 des Aufnahmeteils 8 einsetzbar, wobei das die eigentliche Stecköffnung 10 aufweisende Innenteil 64 jedoch lösbar mit dem Außenteil 62 verbunden ist. Das Rastelement 58 ist hierbei derart relativ zu dem Innenteil 64 und dem Außenteil 62 gelagert, dass es durch Lösen des Innenteils 64 aus dem Außenteil 62 zusammen mit dem verrasteten Steckabschnitt 12 des Steckerteils 14 entnehmbar bzw. auch montierbar ist. In der dargestellten, bevorzugten Ausführung sind das Außenteil 62 und das Innenteil 64 nach Art einer Bajonettverbindung miteinander verbunden. Ein zwischen dem Innenteil 64 und dem Außenteil 62 gebildeter Ringspalt ist über eine Dichtung 66 nach außen abgedichtet. Beide Teile 62, 64 weisen im Bereich der Mündungsseite 22 radiale, flanschartige Verbindungsabschnitte 68, 70 auf, wobei der Verbindungsabschnitt 68 des Außenteils 62 in den Verbindungsabschnitt 70 des Innenteils 64 eingreift. In diesem Bereich ist einerseits die Dichtung 66 angeordnet und andererseits die Bajonettverbindung gebildet, wozu insbesondere auf Fig. 6 und 7 verwiesen wird. Dabei sind Mittel zur Sicherung des Innenteils 64 gegen ungewolltes Verdrehen relativ zu dem Außenteil 62 vorgesehen. Hierzu kann mindestens ein stiftartiges Sicherungselement 72 vorgesehen sein, welches sich lösbar axial durch korrespondierende Öffnungen der beiden Verbindungsabschnitte 68, 70 des Innenteils 64 und des Außenteils 62 erstreckt. Hierzu wird insbesondere auf die Darstellungen in Fig. 2 bis 4 (eingesteckte Sicherungsstellung) und Fig. 5, 6 und 8 (Löse- bzw. Freigabestellung) verwiesen. Bei der dargestellten, bevorzugten Ausführung ist ein bügelartiges, U-förmiges Sicherungsteil 74 vorgesehen, dass mit seinen zwei Schenkeln zwei parallele Sicherungselemente 72 bildet, die über einen Verbindungssteg 75 verbunden sind. Der Verbindungssteg 75 dient als Handhabe zum Einstecken in die Sicherungsstellung sowie auch zum Lösen, indem in einen zwischen der Stirnoberfläche der Einpresspatrone 2 und dem aufliegenden Verbindungssteg 75 gebildeten Spalt 77 ein geeignetes Werkzeug, z. B. eine Schraubendreherklinge, eingesetzt werden kann, um damit den Verbindungssteg 75 mit den Sicherungselementen 72 hochzuziehen. Zur Bildung des Spaltes 77 können im Anlagebereich von Verbindungssteg 75 und/oder Stirnfläche der Einpresspatrone 2 Schrägen gebildet sein (siehe Fig. 2 und 4).

In weiterer vorteilhafter Ausgestaltung ist das Rastelement 58 derart als Doppelrastelement mit zwei axial beabstandeten Teilrastelementen 58a und 58b ausgebildet, dass der Einsteckabschnitt 12 einerseits in einer teilgesteckten Vorraststellung (siehe Fig. 1) und andererseits in einer ganz gestreckten und mediendicht abgedichteten Vollraststellung (Fig. 2) arretierbar ist. Gemäß Fig. 1 liegt in der Vorraststellung eine definiert begrenzte, insbesondere akustisch wahrnehmbar Leckage vor, indem im Bereich der Dichtung 56 axiale Leckagepfade gebildet sind. Hierzu können innerhalb der Stecköffnung 10 in diesem axialen Teilbereich über den Umfang verteilte radiale Vertiefungen 76 gebildet sein. Sofern das Steckerteil 14 zusätzlich noch eine Schmutzdichtung 78 im Bereich der Mündungsseite 22 aufweist, sind auch hier in der Vorraststellung nach Fig. 1 noch Leckagepfade gebildet. Dazu können auch im Mündungsbereich entsprechende radiale Vertiefungen 80 gebildet sein. Hierzu wird auch auf Fig. 3 bis 5 verwiesen.

Die Teilrastelemente 58a, 58b sind bevorzugt als metallische, flach teilringförmige Federklammern ausgebildet und in einem ringförmigen, käfigartigen Aufnahmeteil 82 gehalten. Das Aufnahmeteil 82 besteht zweckmäßig aus Kunststoff.

Bevorzugt besteht die Einpresspatrone 2 - abgesehen von dem metallischen Halteteil 32 - aus einem geeigneten Kunststoff, insbesondere aus einem faserverstärkten Polyamid. Das Kunststoffmaterial sollte vorzugsweise einen Faser- z. B. Glasfaser-Anteil von mindestens 25% enthalten, beispielsweise PA12+GF30 oder PA12+GF50.

Für viele Anwendungen ist es wesentlich, dass die Anschlussvorrichtung 1 relative Verdrehungen der angeschlossenen Medienleitung verhindert. Deshalb sind bevorzugt (in den Zeichnungen nicht erkennbare) Mittel zur Sicherung des Steckerteils 14 gegen Verdrehen relativ zu der - ihrerseits auch über das Halteteil 32 drehfest relativ zu dem Aufnahmeteil 8 fixierten - Einpresspatrone 2 vorgesehen.

Weiterhin weist die Einpresspatrone 2 außenseitig ein Anschlagelement derart auf, dass dieses zur definierten Einsetzbegrenzung des Einpressabschnittes 4 zur Auflage auf dem Aufnahmeteil 8 gelangt. Bei dem bevorzugten Ausführungsbeispiel gemäß Fig. 1 bis 9 fungiert zumindest der Verbindungsabschnitt 68 des Außenteils 62, eventuell auch der Verbindungsabschnitt 70 des Innenteils 64, als derartiges Anschlagelement.

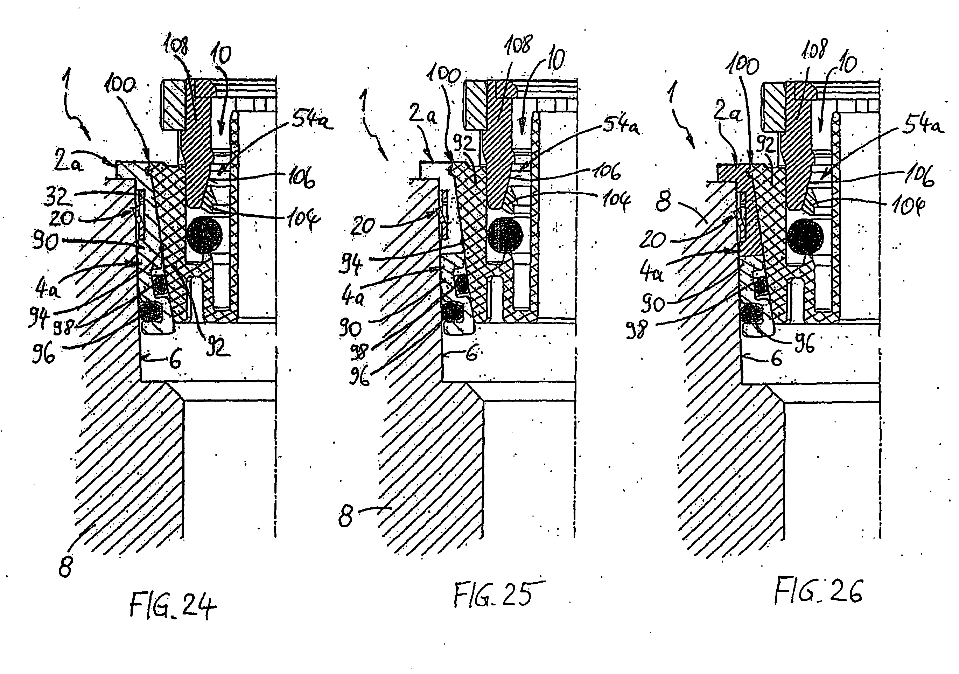

In den Figuren 24 bis 28 sind weitere Ausführungsformen der erfindungsgemäßen Anschlussvorrichtung 1 dargestellt. Dabei besteht das Einsatzteil 2a aus einem Außenteil 90 und einem Innenteil 92. Diese im Wesentlichen hülsenförmigen und koaxial ineinander greifend angeordneten Teile 90, 92 wirken in radialer Richtung über keilartige Schrägflächen 94 derart zusammen, dass das Außenteil 90 in einer Ausgangsstellung mit seinem Einsetzabschnitt 4a ohne Kraft oder mit nur geringer Einsetzkraft in die Anschlussöffnung 6 einführbar und erst dann durch eine relative axiale Einführbewegung des Innenteils 92 zur Halterung in der Anschlussöffnung 6 dübelartig radial spreizbar ist.

Auch bei diesen Ausführungen weist das Einsatzteil 2a auf dem Außenumfang des Außenteils 90 im Bereich des Einsetzabschnittes 4a bevorzugt widerhakenartige Halteelemente 20 zum form- oder kraftforrmschlüssigen Verkrallen in der Anschlussöffnung 6 des Aufnahmeteils 8 auf. Wie dargestellt können auch hier die Halteelemente 20 Teile des ringförmigen Halteteils 32 sein, welches in einer äußeren Ringnut des Außenteils 90 angeordnet ist. Ergänzend wird auf die obigen Erläuterungen verwiesen.

Um das beschriebene radiale Spreizen des Außenteils 90 zu ermöglichen, besteht dieses zumindest abschnittsweise aus einem elastisch dehnbaren Material. Gemäß Fig. 25 kann das Außenteil 90 auch bereichsweise axial und radial so geschlitzt sein, dass hierdurch federelastische Arme gebildet sind, die sich axial erstrecken und über den Umfang verteilt angeordnet sind. Diese Schlitzung ist insbesondere im Bereich der Halteelemente 20 vorgesehen.

Weiterhin ist bei diesen Ausführungen das Außenteil 90 einerseits über eine äußere Dichtung 96 gegen die Anschlussöffnung 6 und andererseits über eine innere Dichtung 98 gegen das Innenteil 92 abgedichtet. Im Bereich dieser Dichtungen 96, 98 ist das Außenteil 90 jedenfalls in Umfangsrichtung durchgehend, also ungeschlizt, ausgebildet.

Somit muß das Außenteil 90 in diesem Bereich elastisch dehnbar ausgebildet sein. Dazu kann es zweckmäßig sein, gemäß Fig. 26 das Außenteil 90 aus unterschiedlichen Materialien auszubilden, und zwar im Bereich der Dichtungen 96, 98 aus einem ersten, dehnbareren Material und im Bereich der Halteelemente 20 aus einem zweiten, starreren Material. Diese Bereiche des Außenteils 90 können insbesondere stoffschlüssig verbunden sein, oder es kann sich um separate Einzelteile handeln.

Vorteilhafterweise sind beim Einsetzen des Einsatzteils 2a die Dichtungen 96, 98 noch nicht oder nur kaum radial verpresst; das eigentliche Verpressen erfolgt erst durch das Spreizen beim Einsetzen des Innenteils 92.

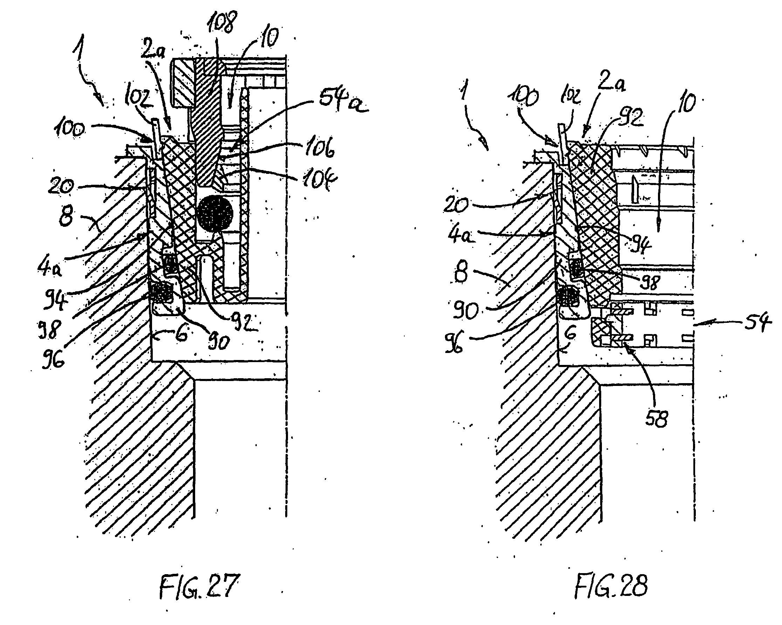

Weiterhin sind bei den Ausführungen gemäß Fig. 24 bis 28 Rastmittel 100 vorgesehen, die das Innenteil 92 in seiner ganz eingesetzten Montagelage relativ zu dem Außenteil 90 arretieren. Bei den Ausführungen gemäß Fig. 24 bis 26 handelt es sich bei den Rastmitteln 100 um eine unlösbare Ausführung, und zwar um eine umfänglich geschlossene, schnappbare Formschlussverbindung. Bei den Alternativen gemäß Fig. 27 und 28 sind die Rastmittel 100 lösbar. Dazu greifen elastische, federarmartige Rastelemente 102 des Außenteils 90 kraftformschlüssig in das Innenteil 92 ein.

Bei der in Fig. 28 dargestellten Ausführung entspricht die Ausgestaltung der Halteeinrichtung 24 zum Arretieren des - hier nicht dargestellten - Steckabschnittes 12 im Wesentlichen den Ausführungsformen gemäß Fig. 1 bis 23. Dies bedeutet, dass am Innenteil 92 das Rastelement 58 gelagert ist. Ergänzend wird auf die obigen Erläuterungen hierzu verwiesen.

Alternativ dazu ist bei den Ausführungen gemäß Fig. 24 bis 27 eine Ausgestaltung der Halteeinrichtung 54 vorgesehen, die ein direktes Einstecken eines von einem Leitungsende gebildeten Steckabschnittes ermöglicht. Dazu ist in dem Innenteil 92 ein Klemmring 104 gelagert, der mit einem Innenkonus 106 so zusammenwirkt, dass durch eine axiale Zugbewegung über den Innenkonus 106 der Klemmring 104 radial verengt wird und mit wenigstens einer Zahnkante gegen den Außenumfang des Steckabschnittes wirkt. Der Innenkonus 106 ist hierbei Teil eines zusätzliche Einsatzteils 108, welches lösbar mit dem Innenteil 92 verbunden ist. Diese Ausführung ermöglicht ein Lösen des Steckabschnittes gemeinsam mit dem Klemmring 104 und dem Einsatzteil 108 auch dann, wenn das Innenteil 92 unlösbar mit dem ebenfalls unlösbar in der Anschlussöffnung 6 gehalterten Außenteil 90 verbunden ist.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im unabhängigen Anspruch definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Anschlussvorrichtung (1) für Medienleitungen (18), bestehend aus einer Einpresspatrone (2, 2a), die einerseits mit einem Einpressabschnitt (4. 4a) in eine Anschlussöffnung (6) eines Aufnahmeteils (8) einsetzbar und andererseits als Steckkupplungsteil zum lösbaren Anschluss einer Medienleitung ausgebildet ist, und zwar als Muffenteil mit einer Stecköffnung (10) zur Aufnahme eines Steckabschnittes (12) eines mit der Medienleitung verbundenen oder verbindbaren Steckerteils (14), wobei eine Halteeinrichtung (54) zum lösbaren Arretieren des Steckabschnittes (12) in seinem in die Stecköffnung (10) eingesteckten Zustand vorgesehen ist,
**dadurch gekennzeichnet, dass** die Halteeinrichtung (54) ein innerhalb der Einpresspatrone (2) gelagertes, radial elastisches Rastelement (58) zum formschlüssig rastenden Hintergreifen einer radialen Raststufe (60) des Steckabschnittes (12) aufweist, wobei die Einpresspatrone (2) derart aus zwei lösbar miteinander verbundenen Teilen (62, 64) besteht und das Rastelement (58) derart gelagert ist, dass das Rastelement (58) durch Lösen des einen Teils (64) der Einpresspatrone (2) entnehmbar ist.

2. Anschlussvorrichtung nach Anspruch 1,
**dadurch gekennzeichnet, dass** die Einpresspatrone (2) aus einem hülsenförmigen Außenteil (62) und einem koaxial in diesem sitzenden, hülsenförmigen Innenteil (64) besteht, wobei die Einpresspatrone (2) über das Außenteil (62) unlösbar in die Anschlussöffnung (6) des Aufnahmeteils (8) einsetzbar ist, wobei das Innenteil (64) lösbar mit dem Außenteil (62) verbunden ist, und wobei das Rastelement (58) derart gelagert ist, dass es durch Lösen des Innenteils (64) aus dem Außenteil (62) entnehmbar ist.

3. Anschlussvorrichtung nach Anspruch 2,
**dadurch gekennzeichnet, dass** das Außenteil (62) und das Innenteil (64) nach Art einer Bajonettverbindung miteinander verbunden sind.

4. Anschlussvorrichtung nach Anspruch 2 oder 3,
**dadurch gekennzeichnet, dass** ein Ringspalt zwischen dem Innenteil (64) und dem Außenteil (62) über eine Dichtung (66) nach außen abgedichtet ist.

5. Anschlussvorrichtung nach einem der Ansprüche 2 bis 4,
**dadurch gekennzeichnet, dass** das Innenteil (64) und das Außenteil (62) im Bereich von flanschartigen Verbindungsabschnitten (68, 70) verbunden sind.

6. Anschlussvorrichtung nach einem der Ansprüche 2 bis 5,
**gekennzeichnet durch** Mittel zur Sicherung des Innenteils (64) gegen ungewolltes Verdrehen relativ zu dem Außenteil (62).

7. Anschlussvorrichtung nach Anspruch 5 oder 6,
**gekennzeichnet durch** mindestens ein stiftartiges, sich lösbar durch korrespondierende Öffnungen der beiden Verbindungsabschnitte (68, 70) des Innenteils (64) und des Außenteils (62) erstreckendes Sicherungselement (72).

8. Anschlussvorrichtung nach einem der Ansprüche 1 bis 7,
**dadurch gekennzeichnet, dass** das Rastelement (58) derart als Doppelrastelement mit zwei axial beabstandeten Teilrastelementen (58a, 58b) ausgebildet ist, dass der Einsteckabschnitt (12) einerseits in einer teilgesteckten Vorraststellung und andererseits in einer ganz gesteckten und mediendicht abgedichteten Vollraststellung arretierbar ist, wobei in der Vorraststellung eine definiert begrenzte, insbesondere akustisch wahrnehmende Leckage vorliegt.

9. Anschlussvorrichtung nach Anspruch 8,
**dadurch gekennzeichnet, dass** die Teilrastelemente (58a, 58b) als metallische Federklammern ausgebildet und in einem ringförmigen, käfigartigen Aufnahmeteil (82) gehalten sind.

10. Anschlussvorrichtung nach einem der Ansprüche 1 bis 9,
**dadurch gekennzeichnet, dass** die Anschlussöffnung (6) des Aufnahmeteils (8) zu ihrer äußeren Mündungsseite (22) hin leicht konisch mit einem Konuswinkel (α) etwa im Bereich von 1° bis 6°, insbesondere etwa 4,5°, erweitert ausgebildet ist.

11. Anschlussvorrichtung nach einem der Ansprüche 1 bis 10,
**dadurch gekennzeichnet, dass** der Einpressabschnitt (4) der Einpresspatrone (2) auf seinem Außenumfang widerhakenartige Halteelemente (20) zum form- oder kraftformschlüssigen und **dadurch** unter normalen Betriebsbedinungen unlösbaren Verkrallen in der Anschlussöffnung (6) des Aufnahmeteils (8) aufweist.

12. Anschlussvorrichtung nach Anspruch 11,
**dadurch gekennzeichnet, dass** die leicht konische Anschlussöffnung (6) im Wirkbereich der Halteelemente (20) des eingesetzten Einpressabschnittes (4) der Einpresspatrone (2) einen zylindrisch ausgebildeten Halteflächenabschnitt (24) aufweist.

13. Anschlussvorrichtung nach Anspruch 12,
**dadurch gekennzeichnet, dass** der zylindrische Halteflächenabschnitt (24) eine kurze axiale Länge (L) aufweist, die etwa im Bereich von 0,5mm bis 4mm, insbesondere 1,5mm bis 2,5mm, liegt.

14. Anschlussvorrichtung nach Anspruch 12 oder 13,
**dadurch gekennzeichnet, dass** im eingesetzten Zustand des Einpressabschnittes (4) die Halteelemente (20) derart mit äußeren Haltekanten (26) im Bereich des zylindrischen Halteflächenabschnittes (24) zum verkrallenden Eingriff gelangen, dass zwischen den Haltekanten (26) und dem mündungsseitigen Ende (28) des zylindrischen Halteflächenabschittes (24) ein axialer Abstand (x) vorhanden ist, der mindestens 0,5mm beträgt.

15. Anschlussvorrichtung nach einem der Ansprüche 12 bis 14,
**dadurch gekennzeichnet, dass** der zylindrische Halteflächenabschitt (24) durch eine radiale Ausnehmung in der konischen Innenfläche der Anschlussöffnung (6) gebildet ist, wobei vorzugsweise der Halteflächenabschnitt (24) einerseits zur Mündungsseite (22) hin mit gleichem Innendurchmesser und anderseits gegenüberliegend über eine radiale, den Innendurchmesser reduzierende Stufenfläche (30) in die konische Innenfläche der Anschlussöffnung (6) übergeht.

16. Anschlussvorrichtung nach einem der Ansprüche 12 bis 14,
**dadurch gekennzeichnet, dass** der zylindrische Halteflächenabschnitt (24) in beiden axialen Richtungen in mit jeweils gleichem Innendurchmesser angrenzende konische Innenflächenabschnitte (6a, 6b) der Anschlussöffnung (6) übergeht, wobei die konischen Innenflächen (6a, 6b) den gleichen oder unterschiedliche Konuswinkel (α) aufweisen.

17. Anschlussvorrichtung nach einem der Ansprüche 11 bis 16,
**dadurch gekennzeichnet, dass** der Einpressabschnitt (4) der Einpresspatrone (2) auf seinem Außenumfang in einer Ringnut (36) ein metallisches, ringförmiges, die über den Umfang verteilten Halteelemente (20) sowie vorzugsweise an einer Umfangsstelle eine durchgehende Unterbrechung (34) aufweisendes Halteteil (32) trägt.

18. Anschlussvorrichtung nach Anspruch 17,
**dadurch gekennzeichnet, dass** das Halteteil (32) als im Wesentlichen zylindrisches Blechformteil ausgebildet ist, wobei die Halteelemente (20) als freigeschnittene und schräg nach außen gebogene Haltezungen (38, 38a) ausgebildet sind.

19. Anschlussvorrichtung nach Anspruch 17 oder 18,
**dadurch gekennzeichnet, dass** das Halteteil (32) derart aus einem Drahtmaterial gewalzt ist, dass seine Randkanten natürliche RundungsRadien aufweisen.

20. Anschlussvorrichtung nach einem der Ansprüche 18 oder 19,
**dadurch gekennzeichnet, dass** die Haltezungen (38, 38a) derart aus dem Halteteil (32) freigestanzt sind, dass im Bereich der Haltekanten (26) etwa radial nach außen gerichtete Stanzgrate gebildet sind.

21. Anschlussvorrichtung nach einem der Ansprüche 17 bis 20,
**dadurch gekennzeichnet, dass** das Halteteil (32) eine Anzahl von sechs bis fünfzehn Halteelementen (20) insbesondere in gleichmäßiger, radialsymmetrischer Umfangsverteilung aufweist.

22. Anschlussvorrichtung nach einem der Ansprüche 17 bis 21,
**dadurch gekennzeichnet, dass** das Halteteil (32) eine radiale Material-Dicke im Bereich von 0,2mm bis 0,6mm, insbesondere 0,4mm, aufweist.

23. Anschlussvorrichtung nach einem der Ansprüche 17 bis 22,
**dadurch gekennzeichnet, dass** die Unterbrechung (34) des ringförmigen Halteteils (32) sich über einen Winkel von bis zu 30° erstreckt, so dass das Halteteil (32) einen Umgreifungswinkel größer/gleich 330° aufweist

24. Anschlussvorrichtung nach einem der Ansprüche 17 bis 23,
**dadurch gekennzeichnet, dass** das Halteteil (32) aus Federstahl, vorzugsweise rostfreiem Stahl oder aus einer Beryllium-Legierung, insbesondere Beryllium-Bronze, besteht.

25. Anschlussvorrichtung nach einem der Ansprüche 11 bis 24,
**dadurch gekennzeichnet, dass** der Einpressabschnitt (4) der Einpresspatrone (2) auf seinem Außenumfang in einem den Halteelementen (20) vorzugsweise in Einsetzrichtung (52) vorgeordneten Bereich mindestens einen Dichtring (48) trägt, wobei vorzugsweise innerhalb der Anschlussöffnung (6) im Bereich des Dichtringes (48) ein kurzer zylindrischer Dichtflächenbereich vorgesehen ist.

26. Anschlussvorrichtung nach einem der Ansprüche 1 bis 25,
**dadurch gekennzeichnet, dass** die Einpresspatrone (2) aus Kunststoff, insbesondere aus einem faserverstärkten Polyamid, besteht.

27. Anschlussvorrichtung nach einem der Ansprüche 1 bis 26,
**gekennzeichnet durch** Mittel zur Sicherung des Einsatzteils (2) gegen Verdrehungen relativ zu dem Aufnahmeteil (8).

28. Anschlussvorrichtung nach einem der Ansprüche 1 bis 27,
**gekennzeichnet durch** Mittel zur Sicherung des Steckerteils (14) gegen Verdrehen relativ zu dem Einsatzteil (2).

29. Anschlussvorrichtung nach einem der Ansprüche 1 bis 28,
**gekennzeichnet durch** Anschlagmittel zur definierten Einsetzbegrenzung des Einpressabschnittes (4) **durch** Anlage auf dem Aufnahmeteil (8).

30. Anschlussvorrichtung nach einem der Ansprüche 1 bis 29,
**dadurch gekennzeichnet, dass** das Einsatzteil (2a) aus einem Außenteil (90) und einem Innenteil (92) besteht, die in radialer Richtung über keilartige Schrägflächen (94) derart zusammenwirken, dass das Außenteil (90) in einer Ausgangsstellung mit seinem Einsetzabschnitt (4a) in die Anschlussöffnung (6) einführbar und durch eine relative axiale Einführbewegung des Innenteils (92) zur Halterung in der Anschlussöffnung (6) radial spreizbar ist.

## Claims

1. Connecting device (1) for media lines (18), comprising a press-in cartridge (2, 2a), which on the one hand is insertable by a press-in section (4, 4a) into a connecting opening (6) of a receiving part (8) and on the other hand is formed as a plug-in coupling part for releasably connecting a media line, to be precise as a socket part with a plug-in opening (10) for receiving a plug-in section (12) of a plug part (14) connected or connectable to the media line, a retaining device (54) for releasably locking the plug-in section (12) in the state when it is plugged into the plug-in opening (10) being provided,
**characterised in that** the retaining device (54) has a radially elastic latching element (58) mounted inside the press-in cartridge (2) for form-locked latching engagement behind a radial latching step (60) of the plug-in section (12), the press-in cartridge (2) comprising two parts (62, 64) releasably connected to one another and the latching element (58) being mounted in such a manner that the latching element (58) is removable by releasing one part (64) of the press-in cartridge (2).

2. Connecting device according to Claim 1,
**characterised in that** the press-in cartridge (2) comprises a sleeve-shaped outer part (62) and a sleeve-shaped inner part (64) seated coaxially in the latter, the press-in cartridge (2) being non-releasably insertable via the outer part (62) into the connecting opening (6) of the receiving part (8), the inner part (64) being releasably connected to the outer part (62), and the latching element (58) being mounted in such a manner that it is removable by releasing the inner part (64) from the outer part (62).

3. Connecting device according to Claim 2,
**characterised in that** the outer part (62) and the inner part (64) are connected to one another in the manner of a bayonet connection.

4. Connecting device according to Claim 2 or 3,
**characterised in that** an annular gap between the inner part (64) and the outer part (62) is sealed off from the outside via a seal (66).

5. Connecting device according to one of Claims 2 to 4,
**characterised in that** the inner part (64) and the outer part (62) are connected in the region of flange-like connecting sections (68, 70).

6. Connecting device according to one of Claims 2 to 5,
**characterised by** means for securing the inner part (64) against unintended rotation relative to the outer part (62).

7. Connecting device according to Claim 5 or 6,
**characterised by** at least one pin-like securing element (72) releasably extending through corresponding openings of the two connecting sections (68, 70) of the inner part (64) and of the outer part (62).

8. Connecting device according to one of Claims 1 to 7,
**characterised in that** the latching element (58) is formed as a double latching element with two axially spaced part latching elements (58a, 58b) in such a manner that the plug-in section (12) is lockable on the one hand in a partly plugged-in pre-latching position and on the other hand in a fully plugged-in and media-tightly sealed-off full-latching position, with a defined limited, in particular audibly detectable, leakage existing in the pre-latching position.

9. Connecting device according to Claim 8,
**characterised in that** the part latching elements (58a, 58b) are formed as metallic spring clips and are held in an annular, cage-like receiving part (82).

10. Connecting device according to one of Claims 1 to 9,
**characterised in that** the connecting opening (6) of the receiving part (8) is formed, towards its outer mouth side (22), slightly conically widened with a cone angle (α) approximately in the range of 1° to 6°, in particular approximately 4.5°.

11. Connecting device according to one of Claims 1 to 10,
**characterised in that** the press-in section (4) of the press-in cartridge (2) has on its outer circumference barb-like retaining elements (20) for form-locked or force-locked and form-locked, and thereby under normal operating conditions, non-releasable catching in the connecting opening (6) of the receiving part (8).

12. Connecting device according to Claim 11,
**characterised in that** the slightly conical connecting opening (6) has a cylindrically formed retaining surface section (24) in the active region of the retaining elements (20) of the inserted press-in section (4) of the press-in cartridge (2).

13. Connecting device according to Claim 12,
**characterised in that** the cylindrical retaining surface section (24) has a short axial length (L) lying approximately in the range of 0.5 mm to 4 mm, in particular 1.5 mm to 2.5 mm.

14. Connecting device according to Claim 12 or 13,
**characterised in that** in the inserted state of the press-in section (4) the retaining elements (20) come into catching engagement by means of outer retaining edges (26) in the region of the cylindrical retaining surface section (24) in such a manner that an axial distance (x), which is at least 0.5 mm, is present between the retaining edges (26) and the mouth-side end (28) of the cylindrical retaining surface section (24).

15. Connecting device according to one of Claims 12 to 14,
**characterised in that** the cylindrical retaining surface section (24) is formed by a radial recess in the conical inner surface of the connecting opening (6), the retaining surface section (24) preferably merging into the conical inner surface of the connecting opening (6) on the one hand, towards the mouth side (22), with the same inside diameter and on the other hand, opposite this, via a radial step surface (30) reducing the inside diameter.

16. Connecting device according to one of Claims 12 to 14,
**characterised in that** the cylindrical retaining surface section (24) merges in both axial directions into conical inner surface sections (6a, 6b) of the connecting opening (6), adjoining with respectively the same inside diameter, the conical inner surfaces (6a, 6b) having the same or different cone angles (α).

17. Connecting device according to one of Claims 11 to 16,
**characterised in that** the press-in section (14) of the press-in cartridge (2) carries on its outer circumference in an annular groove (36) a metallic, annular retaining part (32) having the retaining elements (20) distributed over the circumference and, preferably at one circumferential location, a continuous interruption (34).

18. Connecting device according to Claim 17,
**characterised in that** the retaining part (32) is formed as a substantially cylindrical sheet-metal shaped part, the retaining elements (20) being formed as cut-free and obliquely outwardly bent retaining tongues (38, 38a).

19. Connecting device according to Claim 17 or 18,
**characterised in that** the retaining part (32) is rolled from a wire material in such a manner that its marginal edges have natural rounding radii.

20. Connecting device according to one of Claims 18 or 19,
**characterised in that** the retaining tongues (38, 38a) are punched free from the retaining part (32) in such a manner that approximately radially outwardly directed punch burrs are formed in the region of the retaining edges (26).

21. Connecting device according to one of Claims 17 to 20,
**characterised in that** the retaining part (32) has a number of six to fifteen retaining elements (20) in particular in a uniform, radially symmetrical circumferential distribution.

22. Connecting device according to one of Claims 17 to 21,
**characterised in that** the retaining part (32) has a radial material thickness in the range of 0.2 mm to 0.6 mm, in particular 0.4 mm.

23. Connecting device according to one of Claims 17 to 22,
**characterised in that** the interruption (34) of the annular retaining part (32) extends over an angle of up to 30°, so that the retaining part (32) has an encompassing angle of greater than or equal to 330°.

24. Connecting device according to one of Claims 17 to 23,
**characterised in that** the retaining part (32) is composed of spring steel, preferably stainless steel, or from a beryllium alloy, in particular beryllium bronze.

25. Connecting device according to one of Claims 11 to 24,
**characterised in that** the press-in section (4) of the press-in cartridge (2) carries on its outer circumference at least one sealing ring (48) in a region preferably arranged in front of the retaining elements (20) in the insertion direction (52), a short cylindrical sealing surface region preferably being provided inside the connecting opening (6) in the region of the sealing ring (48).

26. Connecting device according to one of Claims 1 to 25,
**characterised in that** the press-in cartridge (2) is composed of plastic, in particular of a fibre-reinforced polyamide.

27. Connecting device according to one of Claims 1 to 26,
**characterised by** means for securing the insert part (2) against rotations relative to the receiving part (8).

28. Connecting device according to one of Claims 1 to 27,
**characterised by** means for securing the plug part (14) against rotation relative to the insert part (2).

29. Connecting device according to one of Claims 1 to 28,
**characterised by** stop means for defined insertion limiting of the press-in section (4) by abutment on the receiving part (8).

30. Connecting device according to one of Claims 1 to 29,
**characterised in that** the insert part (2a) comprises an outer part (90) and an inner part (92) which cooperate in the radial direction via wedge-like oblique surfaces (94) in such a manner that, the outer part (90) in a starting position can be introduced by its insertion section (4a) into the connecting opening (6) and can be radially spread by a relative axial introducing movement of the inner part (92) for retention in the connecting opening (6).

## Revendications

1. Dispositif de raccordement (1) pour des conduites de fluide (18), formé par une cartouche insérable (2, 2a) qui, d'une part, peut être insérée avec un tronçon insérable (4, 4a) dans l'ouverture de raccordement (6) d'un élément de réception (8) et, d'autre part, est réalisée sous la forme d'une pièce d'accouplement femelle pour le raccordement amovible d'une conduite de fluide, à savoir sous la forme d'un manchon avec une ouverture d'enfichage (10) destinée à recevoir un tronçon enfichable (12) d'un raccord mâle (14) assemblé ou pouvant être assemblé à la conduite de fluide, un dispositif de retenue (54) étant prévu pour l'arrêt amovible du tronçon enfichable (12) dans sa position enfichée dans l'ouverture d'enfichage (10),
**caractérisé en ce que** le dispositif de retenue (54) comporte un élément de blocage (58) radialement élastique, logé à l'intérieur de la cartouche insérable (2), destiné à enserrer par l'arrière par conjugaison de forme avec effet de blocage un épaulement de blocage (60) radial du tronçon enfichable (12), la cartouche insérable (2) étant formée de deux parties (62, 64) reliées de manière amovible l'une à l'autre, et l'élément de blocage (58) étant logé de telle sorte que l'élément de blocage (58) peut être retiré par la désolidarisation de l'une des parties (64) de la cartouche insérable (2).

2. Dispositif de raccordement selon la revendication 1,
**caractérisé en ce que** la cartouche insérable (2) est formée par une partie extérieure (62) de type manchon et une partie intérieure (64) de type manchon, posée coaxialement dans cette dernière, la cartouche insérable (2) pouvant être insérée par l'intermédiaire de la partie extérieure (62) de manière inamovible dans l'ouverture de raccordement (6) de l'élément de réception (8), la partie intérieure (64) étant reliée de manière amovible à la partie extérieure (62), et l'élément de blocage (58) étant logé de telle sorte qu'il peut être retiré hors de la partie extérieure (62) par la désolidarisation de la partie intérieure (64).

3. Dispositif de raccordement selon la revendication 2,
**caractérisé en ce que** la partie extérieure (62) et la partie intérieure (64) sont assemblées l'une à l'autre selon un assemblage de type baïonnette.

4. Dispositif de raccordement selon la revendication 2 ou 3,
**caractérisé en ce qu'**une fente annulaire entre la partie intérieure (64) et la partie extérieure (62) est rendue étanche vers l'extérieur par une garniture d'étanchéité (66).

5. Dispositif de raccordement selon l'une quelconque des revendications 2 à 4,
**caractérisé en ce que** la partie intérieure (64) et la partie extérieure (62) sont assemblées l'une à l'autre dans la zone des parties d'assemblage (68, 70) en forme de collerettes.

6. Dispositif de raccordement selon l'une quelconque des revendications 2 à 5,
**caractérisé par** des moyens destinés à immobiliser la partie intérieure (64) contre toute rotation involontaire par rapport à la partie extérieure (62).

7. Dispositif de raccordement selon la revendication 5 ou 6,
**caractérisé par** au moins un élément d'immobilisation (72) en forme de tenon, qui passe de manière amovible à travers des orifices correspondants des deux parties d'assemblage (68, 70) de la partie intérieure (64) et de la partie extérieure (62).

8. Dispositif de raccordement selon l'une quelconque des revendications 1 à 7,
**caractérisé en ce que** l'élément de blocage (58) est réalisé sous la forme d'un double élément de blocage avec deux éléments de blocage partiels (58a, 58b) situés à distance axiale l'un de l'autre, de telle sorte que le tronçon enfichable (12) peut être arrêté, d'une part, dans une position de blocage préliminaire partiellement enfichée et, d'autre part, dans une position de blocage complet, totalement enfichée et étanche aux fluides, une fuite définie limitée, perceptible en particulier acoustiquement, étant présente dans la position de blocage préliminaire.

9. Dispositif de raccordement selon la revendication 8,
**caractérisé en ce que** les éléments de blocage partiels (58a, 58b) sont réalisés sous forme de pinces à ressort métalliques et sont maintenues dans un élément de réception (82) annulaire, de type cage.

10. Dispositif de raccordement selon l'une quelconque des revendications 1 à 9,
**caractérisé en ce que** l'ouverture de raccordement (6) de l'élément de réception (8) est réalisée en s'élargissant légèrement en forme de cône vers son côté d'embouchure extérieur (22), avec un angle de cône (α) qui se situe sensiblement dans la plage de 1° à 6°, en particulier autour de 4,5°.

11. Dispositif de raccordement selon l'une quelconque des revendications 1 à 10,
**caractérisé en ce que** le tronçon insérable (4) de la cartouche insérable (2) comporte sur sa périphérie extérieure des éléments de retenue (20) en forme d'ardillon pour un agrippement par conjugaison de forme et conjugaison de force et donc inamovible dans des conditions de fonctionnement normales dans l'ouverture de raccordement (6) de l'élément de réception (8).

12. Dispositif de raccordement selon la revendication 11,
**caractérisé en ce que** l'ouverture de raccordement (6) légèrement conique comporte un segment à surface de retenue (24) de forme cylindrique dans la zone d'action des éléments de retenue (20) du tronçon insérable (4) engagé de la cartouche insérable (2).

13. Dispositif de raccordement selon la revendication 12,
**caractérisé en ce que** le segment à surface de retenue (24) cylindrique a une courte longueur axiale (L) qui se situe à peu près dans la plage de 0,5 mm à 4 mm, en particulier de 1,5 mm à 2,5 mm.

14. Dispositif de raccordement selon la revendication 12 ou 13,
**caractérisé en ce que** dans la position engagée du tronçon insérable (4), les éléments de retenue (20) viennent s'agripper à des arêtes de retenue (26) extérieures dans la zone du segment à surface de retenue (24) cylindrique, de telle sorte qu'il se forme une distance axiale (x), qui mesure au moins 0,5 mm, entre les arêtes de retenue (26) et l'extrémité (28), du côté bouche, du segment à surface de retenue (24) cylindrique.

15. Dispositif de raccordement selon l'une quelconque des revendications 12 à 14,
**caractérisé en ce que** le segment à surface de retenue (24) cylindrique est formé par un évidement radial dans la face intérieure conique de l'ouverture de raccordement (6), ledit segment à surface de retenue (24) cylindrique se prolongeant de préférence, d'une part, vers le côté bouche (22) avec le même diamètre intérieur et, d'autre part, sur le côté opposé, par un décrochement (30), diminuant le diamètre intérieur, dans la face intérieure conique de l'ouverture de raccordement (6).

16. Dispositif de raccordement selon l'une quelconque des revendications 12 à 14,
**caractérisé en ce que** le segment à surface de retenue (24) cylindrique se prolonge dans les deux directions axiales par des segments de face intérieure (6a, 6b) coniques adjacents, ayant respectivement le même diamètre intérieur, de l'ouverture de raccordement (6), les faces intérieures (6a, 6b) coniques ayant le même angle de cône (α) ou des angles de cône différents.

17. Dispositif de raccordement selon l'une quelconque des revendications 11 à 16,
**caractérisé en ce que** le tronçon insérable (4) de la cartouche insérable (2) porte sur sa périphérie extérieure, dans une rainure annulaire (36), une pièce de retenue (32) métallique annulaire, qui comporte des éléments de retenue (20) répartis sur la périphérie, ainsi que, de préférence à un emplacement du pourtour, une rupture (34) de part en part.

18. Dispositif de raccordement selon la revendication 17,
**caractérisé en ce que** la pièce de retenue (32) est réalisée sous la forme d'une pièce formée en tôle sensiblement cylindrique, les éléments de retenue (20) étant réalisés sous forme de languettes de retenue (38, 38a) dégagées par découpe et courbées en oblique vers l'extérieur.

19. Dispositif de raccordement selon la revendication 17 ou 18,
**caractérisé en ce que** la pièce de retenue (32) est laminée dans un matériau de type fil de telle sorte que ses arêtes de bordure présentent des rayons de courbure naturels.

20. Dispositif de raccordement selon la revendication 18 ou 19,
**caractérisé en ce que** les languettes de retenue (38, 38a) sont dégagées par découpe dans la pièce de retenue (32), de telle sorte que dans la zone des arêtes de retenue (26) sont formées des arêtes de découpe orientées radialement vers l'extérieur.

21. Dispositif de raccordement selon l'une quelconque des revendications 17 à 20,
**caractérisé en ce que** la pièce de retenue (32) comporte un nombre de six à quinze éléments de retenue (20), répartis en particulier uniformément et à symétrie radiale sur la périphérie.

22. Dispositif de raccordement selon l'une quelconque des revendications 17 à 21,
**caractérisé en ce que** la pièce de retenue (32) a une épaisseur radiale dans la plage de 0,2 mm à 0,6 mm, en particulier de 0,4 mm.

23. Dispositif de raccordement selon l'une quelconque des revendications 17 à 22,
**caractérisé en ce que** la rupture (34) de la pièce de retenue (32) annulaire s'étend sur un angle de 30° maximum, de telle sorte que la pièce de retenue (32) possède un angle d'enserrement supérieur ou égal à 330°.

24. Dispositif de raccordement selon l'une quelconque des revendications 17 à 23,
**caractérisé en ce que** la pièce de retenue (32) est réalisée en acier à ressort, de préférence en acier inoxydable, ou dans un alliage de béryllium, en particulier de bronze et béryllium.

25. Dispositif de raccordement selon l'une quelconque des revendications 11 à 24,
**caractérisé en ce que** le tronçon insérable (4) de la cartouche insérable (2) porte sur sa périphérie extérieure, dans une zone située de préférence en amont des éléments de retenue (20), par référence à la direction d'introduction (52), au moins une bague d'étanchéité (48), une courte zone cylindrique à surfaces étanches étant prévue de préférence à l'intérieur de l'ouverture de raccordement (6) dans la zone de la bague d'étanchéité (48).

26. Dispositif de raccordement selon l'une quelconque des revendications 1 à 25,
**caractérisé en ce que** la cartouche insérable (2) est réalisée en matière plastique, en particulier en polyamide renforcé par des fibres.

27. Dispositif de raccordement selon l'une quelconque des revendications 1 à 26,
**caractérisé par** des moyens destinés à immobiliser l'élément insérable (2) contre toute rotation par rapport à l'élément de réception (8).

28. Dispositif de raccordement selon l'une quelconque des revendications 1 à 27,
**caractérisé par** des moyens destinés à immobiliser le raccord mâle (14) contre toute rotation par rapport à l'élément insérable (2).

29. Dispositif de raccordement selon l'une quelconque des revendications 1 à 28,
**caractérisé par** des moyens de butée destinés à définir la limite d'engagement du tronçon insérable (4) au moyen d'un appui sur l'élément de réception (8).

30. Dispositif de raccordement selon l'une quelconque des revendications 1 à 29,
**caractérisé en ce que** l'élément insérable (2a) est formé par une partie extérieure (90) et une partie intérieure (92), qui coopèrent entre elles dans la direction radiale par l'intermédiaire de surfaces obliques (94) de forme conique, de telle sorte que la partie extérieure (90), dans une position de départ, peut être introduite avec son tronçon insérable (4a) dans l'ouverture de raccordement (6) et, en vue d'être maintenue dans l'ouverture de raccordement (6), peut être écartée radialement par un mouvement d'introduction axial relatif de la partie intérieure (92).
